# EUROPEAN PATENT APPLICATION

(11) **EP 0 650 000 A1**
(43) Date of publication of application: **26.04.1995**
(21) Application number: 94113909.9
(22) Date of filing: 05.09.1994
(51) Int. Cl.: F16H 61/16, F16H 61/00

(54) **An electronic control system for a stepless automatic gearbox for motor vehicles, particularly motor cars**

(30) Priority: 25.10.1993 IT TO930795
(71) Applicant: FIAT AUTO S.p.A., I-10135 Torino (IT)
(72) Inventor: Malara, Nicola, I-20095 Cusano Milanino (Milano) (IT); Balsamo, Andrea, I-10135 Torino (IT); Moscatelli, Saverio, I-20151 Milano (IT)
(74) Representative: Serra, Francesco

(57) **Abstract**

An electronic control system for a stepless automatic gearbox (2) for motor vehicles comprises push-buttons (10, 12, 14) for selecting forward movement in low gears or in all gears, and reverse gear respectively. Reverse gear can only be selected if the vehicle speed is below a predetermined threshold; the gearbox is brought automatically to the parking position if the ignition switch (20) is in the open position and the vehicle speed is below a predetermined threshold.

## Description

The present invention relates to an electronic control system for a stepless automatic gearbox for motor vehicles, particularly motor cars.

Whether the automatic gearbox is stepless or not, it is controlled by a lever which is normally disposed on the tunnel of the car and which the driver actuates to position the gearbox mechanism in the desired operating condition, moving the lever in suitable selector gates which usually bear the letters "L" (low) when a low gear is desired, "D" (drive), in which case the entire operating strategy is left to the automatic gearbox depending on the position of the accelerator pedal, "R" (reverse) to indicate reverse gear, and a position indicated "P" (park) which is selected when it is desired to park the car permanently.

An arrangement as described above has certain disadvantages: firstly, the presence of the gear lever projecting from the tunnel of the car can impede the driver's movement towards the passenger side and the passenger's movement towards the driver's side; secondly, if the driver "fiddles", quite involuntarily, with the gear lever, he can cause undesired or even dangerous movements of the lever from one position to another, for example, sudden changes from the "drive" position to the "low" position or the direct passage from one of the forward gear positions to reverse gear, seriously damaging the entire transmission assembly.

Furthermore, it is possible that the driver may park the car on a sloping road and leave it without moving the gear lever to the "park" position; under these circumstances, it is possible for the car to move down the slope, which is obviously extremely dangerous.

The object of the present invention is to overcome the above disadvantages by virtue of an electronic system for controlling a stepless automatic gearbox for motor vehicles, particularly motor cars, having the characteristics mentioned specifically in the following claims.

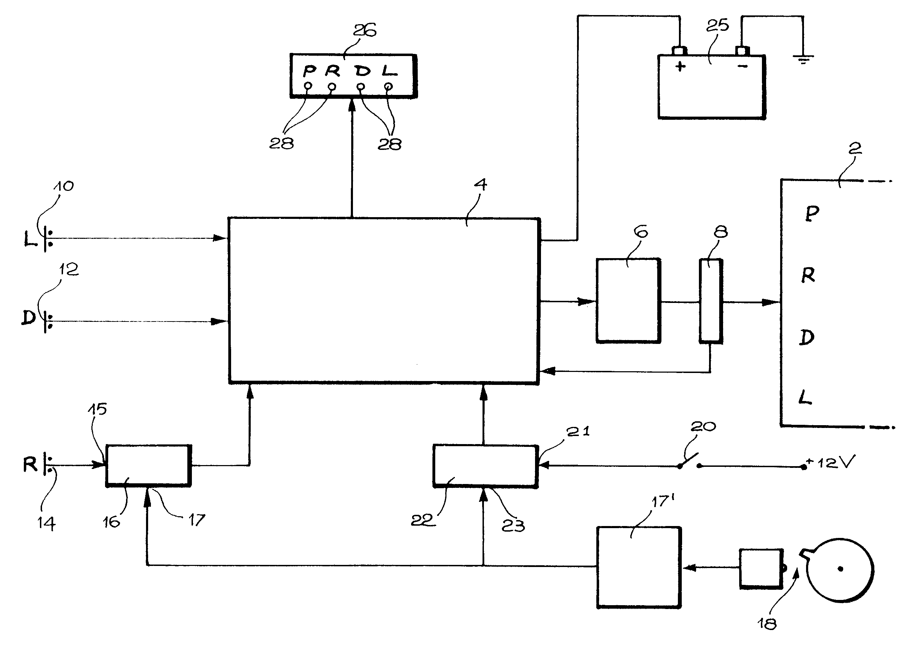

The invention will now be described, purely by way of non-limiting example, with reference to the appended drawing which shows the electronic system according to the invention in block form. With reference to this drawing, the automatic gearbox, for example of the stepless type, of a motor vehicle not illustrated is schematically indicated 2; an electronic control unit 4 is connected to an electric motor, for example, a stepper motor 6 connected to an encoder 8 which is in turn connected to the central unit 4; the motor 6 can cause the gearbox mechanisms to adopt the positions corresponding to "L" (low), "D" (drive), "R" (reverse) and "P" (park). Inside the vehicle, push-buttons 10, 12, 14 are disposed within the driver's reach, for example, on the dashboard or on the steering wheel, for selecting the gearbox mechanisms in the "L", "D", "R" positions respectively; the push-buttons 10, 12 are connected directly to the electronic control unit 4 whilst the push-button 14 is connected to a first input 15 of a coincidence circuit 16 at the second input 17 of which arrives the signal from a threshold comparator 17 connected to a detecting device 18 measuring the speed of the car, for example, a phonic-wheel device fitted on the gearbox output shaft.

The on-off signal of the ignition switch 20 arrives at a first input 21 of a coincidence circuit 22 at the second input 23 of which arrives the signal from the threshold comparator 17' connected to the speed-measuring device 18; the coincidence circuit 22 is connected to the electronic control unit 4, which is supplied in known manner by the battery 25 in the car.

The electronic control unit 4 provides signals indicative of the gear engaged by means of the push-buttons 10, 12, 14 to a gear display 26 on the car dashboard, indicating whether the gearbox is in position "L", "D", "R", "P", for example, by the lighting of LEDs associated with the different positions which the gearbox can adopt. As can be seen on the display 26, there is a signal "P" (park) which does not correspond to any of the push-buttons 10, 12, 14 and the function of which will be explained below.

In operation, the driver actuates one of the push-buttons L, D or R to inform the electronic unit of his desire to engage a forward gear, if he has actuated the switch "L" or switch "D", or his intention to engage reverse gear if he presses the push-button "R".

If the switch "L" or "D" has been actuated, the electronic unit 4 controls the stepper motor 6 which, by means of the encoder 8, positions the gearbox mechanisms in the positions corresponding to the desired selection, that is, in the position "L" or the position "D"; at the same time, the electronic unit 4 illuminates the LED on the display 26, corresponding to the push-button selected.

If the switch "R", corresponding to the engagement of reverse gear, has been actuated, the electronic unit 4 controls the actuation of the gearbox in the reverse gear position only if also the signal from the threshold comparator 17', connected to the tachometric sensor 18, indicating that the car speed is below a given predetermined threshold, for example 5 km/h, is supplied to the coincidence circuit 16 at the same time as the signal from the pressed push-button "R"; in this way, dangerous engagement of reverse gear when the car is still moving at a speed such that the engagement of reverse gear itself might be harmful to the transmission assembly is avoided.

If the electronic unit 4 receives from the coincidence circuit 22 the signal that the ignition switch 20 is in the off position, that is, that the driver has decided to switch off the engine, and, at the same time, the speed of the car is below a predetermined threshold, for example 5 km/h, this signal being picked up by the threshold comparator 17' connected to the tachometric sensor 18, the electronic unit 4 controls the stepper motor 6 such that the gearbox is placed automatically in the park position, thus ensuring that the car will not move from its current position until the driver has turned the ignition switch 20 on again.

The advantages of the system according to the invention are clear from what has been described and illustrated above; the inconvenient and, in certain senses, dangerous lever for controlling the gearbox on the central tunnel of the car is eliminated and replaced by simple push-buttons on the dashboard or in positions which the driver can easily reach; reverse gear can't be engaged provided that the car has practically stopped; when the driver has turned the ignition switch to the off position, thus indicating unequivocally his intention to stop, and the car is stationary or practically stationary, the gearbox is automatically positioned in the park position, thus preventing the car from performing any undesired, dangerous movements.

Naturally, the principle of the invention remaining the same, the forms of embodiment and details of realisation can be widely varied with respect to what has been described and illustrated, without departing from the scope of the present invention. In particular, it is possible to envisage the use of a single push-button for controlling forward movement and in this case the two push-buttons "L" and "D" would be replaced by a single push-button with two positions; the speed threshold, above which it is impossible to select reverse gear and the automatic park function, could assume values different from those specified the display indicating the gear selected could be configured differently from that which has been illustrated.

## Claims

1. An electronic control system for a stepless automatic gearbox for motor vehicles, particularly cars, in which the gearbox is controlled by an electronic control unit (4), characterized in that it comprises:
- selector means (10, 12, 14) for supplying signals indicative of the direction and type of gear desired for the vehicle to the electronic control unit (4);
- means (6, 8) for actuating the gearbox (2) which are controlled by the electronic control unit (4) and can move the mechanisms of the gearbox (2) into positions corresponding to the direction and type of gear desired;
- means for detecting the speed (18) of the vehicle;
- first consent means (16) for allowing reverse gear to be engaged if the vehicle speed is below a predetermined threshold;
- second consent means (22) for allowing the gearbox (2) to be placed in the park position if the vehicle speed is below said predetermined threshold and the ignition switch (20) is in its open position.

2. An electronic control system for a stepless gearbox according to Claim 1, characterized in that it further comprises a device (26) for displaying the direction and type of gear selected.

3. An electronic control system for a stepless gearbox according to Claim 1 or 2, characterized in that the activation means (6, 8) comprise a stepper motor (6) and an encoder (8).

4. An electronic control system for a stepless gearbox according to any one of the preceding claims, characterized in that the means (18) for detecting the vehicle speed comprise a phonic-wheel sensor (18).
